(19) Europäisches Patentamt
European Patent Office
Office européen des brevets

(11) Publication number: **0 313 071 B1**

(12) **EUROPEAN PATENT SPECIFICATION**

(45) Date of publication of patent specification: **21.04.93**

(51) Int. Cl.5: **C08J 7/02**, C09J 133/14, C09J 167/00, C09J 175/16

(21) Application number: **88117576.4**

(22) Date of filing: **21.10.88**

(54) **Reactive pressure sensitive adhesive composition, sealer tape, sheet or molding by use thereof.**

(30) Priority: **22.10.87 JP 266899/87**
**22.10.87 JP 266901/87**

(43) Date of publication of application:
**26.04.89 Bulletin 89/17**

(45) Publication of the grant of the patent:
**21.04.93 Bulletin 93/16**

(84) Designated Contracting States:
**DE FR GB IT SE**

(56) References cited:
**WO-A-84/04320**
**US-A- 4 113 792**
**US-A- 4 379 201**
**US-E- 24 906**

**PATENT ABSTRACTS OF JAPAN, vol. 10, no. 182 (C-356)[2238], 25th June 1986; & JP-A-61 028 572 (F.S.K.K.K.) 08-02-1987**

**CHEMICAL ABSTRACTS, vol. 83, 1975, page 42, abstract no. 148278f, Columbus, Ohio, US; & JP-A-75 08 832 (TOA GOSEI CHEMICAL INDUSTRY CO., LTD) 29-01-1975**

**PATENT ABSTRACTS OF JAPAN, vol. 5, no. 8**

**(C-39)[680], 20th January 1981; & JP-A-55 135 119 (CANON K.K.) 21-10-1980**

(73) Proprietor: **NICHIBAN CO. LTD.**
**2-4, Kudan-minami 2-chome Chiyoda-ku Tokyo 102(JP)**

(72) Inventor: **Ono, Kiyoshi c/o Nichiban Company Ltd.**
**2-4, Kudan-minami 2-chome Chiyoda-ku Tokyo(JP)**
Inventor: **Kishimoto, Yoshio c/o Nichiban Company Ltd.**
**2-4, Kudan-minami 2-chome Chiyoda-ku Tokyo(JP)**
Inventor: **Satou, Tetsuhito c/o Nichiban Company Ltd.**
**2-4, Kudan-minami 2-chome Chiyoda-ku Tokyo(JP)**

(74) Representative: **May, Hans Ulrich, Dr. et al Patentanwalt Dr.H.U.May, Thierschstrasse 27 W-8000 München 22 (DE)**

EP 0 313 071 B1

## Description

BACKGROUND OF THE INVENTION

This invention relates to a reactive pressure sensitive adhesive composition curable with heat or ionized radiation, and a sealing tape or sheet or molding making use thereof. More particularly, the present invention relates to a reactive pressure sensitive adhesive curable composition, which has initially adhesive force but generates bonding force by curing under melting by heat or curing by radiation such as by light, and to a sealing tape or sheet comprising the above reactive pressure sensitive curable adhesive layer having a thickness of about $10^{-5}$ to $10^{-2}$ m applied on a substrate surface or to a molding comprising the above reactive pressure sensitive curable adhesive which has any desired shape.

Pressure sensitive adhesive tape or sheet comprising the above pressure sensitive adhesive applied on a substrate surface has tackiness at normal temperature and can be plastered onto an objective material without any preliminary operation. Besides, it can be advantageously plastered again and therefore has been used in a variety of fields. However, what we call "pressure sensitive adhesive" has the drawback that it has generally weaker adhesive force as compared with adhesives. Also, since the tape is formed by coating a tape substrate with pressure sensitive adhesive, it cannot be plastered without gap onto a site with a complicated shape, for example, a site with stepped difference, or a site which is recessed or protruded on account of thickness, hardness, firmness, etc. possessed by the substrate. Further the pressure sensitive adhesive tape involves therein a problem in water resistance, solvent resistance and heat resistance, although this problem can be overcome by a curing reaction.

On the other hand, paints, adhesives, sealing materials are adaptable for complicated shapes, curved surfaces, holes, projections, stepped differences, gaps, etc. However, these paints, adhesives and sealing materials require pretreatment such as mixing with a curing agent and they are ordinarily in the form of sol or paste contained in a solvent, and therefore many problems are involved in their handling, since some of them are difficult to be handled directly with hands or must be handled in a vessel due to their flowability. Also, care must be taken to avoid contamination of surfaces other than target surfaces due to flowing, sagging and splash during applications because removal of the material from contaminated surfaces is extremely difficult and is frequently impossible.

Most of the sealing materials to be used in the steps of production of vehicle bodies, the assembling or armoring of automobiles, ship, railroad vehicles, aircrafts, rockets, etc. are in a form of paste and those in a form of tape can be seen only in a part thereof. Tape-shaped sealing materials are difficult, by having insufficient sealing effect at a site with a complicated shape, involving also a problem in water resistance and also weak adhesive force to be readily peeled off. However, since a very smooth surface can be formed, they have been used in applications where only appearance is important. On the other hand, paste-like sealing materials generally used frequently have excellent sealing effect and adhesive force, but cumbersome operation is required for making the appearance smooth and therefore they have been utilized at the sites in the inner portions which cannot be seen or which can be scarcely observed. However, in recent years, good appearance has been demanded by the users, particularly in the field of automobiles, even to the details which cannot or scarcely be observed. For this reason, it has become necessary to have a sealing material endowed with both of beautiful appearance after application of the tape-shaped sealing material and sealing effect and adhesive force of the paste-like sealing material. In addition, for the paste-like sealing materials, a tool for exclusive use (usually gun) has been used in application. Accordingly, at narrow places where such gun cannot enter or working can be done with difficulty even if it can enter, not only workability is poor, but erroneous attachment of the sealing material onto other places than the adherend will require enormous labor for wiping it off and it cannot always be removed completely.

While, thermosetting sheets and hot melt adhesives have been commercially available, there has not yet been any material which is tacky in the normal state and curable by heating, to give high adhesive strength.

The pressure-sensitive curable adhesive described in JP-A-61-28572 is prepared by mixing an acrylic pressure-sensitive adhesive with radiation-polymerisable urethane acrylate oligomer. A layer of the adhesive is formed on a substrate. However, the adhesion of this adhesive layer is reduced when it is irradiated to polymerise and cure the radiation-polymerisable oligomer.

In view of the state of the art as described above, the present inventors have made intensive efforts in order to obtain a sealing mateial which has both, namely the good features of pressure sensitive adhesives and the good features of paints, adhesives and sealers and in which shortcomings of these have been removed, and they have consequently accomplished the present invention, namely a reactive pressure-sensitive curable adhesive composition having increased adhesive force after curing which comprises at least one saturated polyester resin which is nonflowable at temperatures up to 60 °C and at least one (meth)acrylic urethane oligomer wherein the formulation ratio of said saturated polyester resins to said oligomers is 7:3 to 2:8 by weight.

Preferred embodiments of the invention are indicated in the claims.

The saturated polyester resins are superior to other resins in the compatibility with (meth)acrylic urethane oligomers, as well as in the characteristics before and after curing and in the facility at the time of preparing.

Further, the (meth)acrylic urethane oligomers have a high viscosity as compared with the acrylic monomer, acrylic oligomer, etc. even if the molecular weight is the same, because the urethane bond is included in the molecular structure.

Also, since the (meth)acrylic urethane oligomers do not ooze from the composition even before curing, they are preferable in view of the stability of the product. Because these (meth)acrylic urethane oligomers include the urethane bond, the product shows good resistance to wear after curing and toughness.

The product of the invention has an adhesive force which enables plastering onto an adherend without any preliminary operation and fixing until completion of curing. Besides, it can be removed without any contamination on a plastered portion and thereafter can be plastered again, and once curing is performed according to a certain method, the present product exhibits the same quality and performance as the conventional paints, adhesives, sealing materials, protective film forming agents or binder agents of organic powder, since the present product is well adaptable to a complicated shape such as curved surface, holes, projections, stepped differences, gaps, etc. As the curing method, heat, light, ionized radiation can be utilized depending on the object, the processes, the properties of the pigment and economy. A sealing tape or sheet or molding comprising the above reactive pressure sensitive, curable adhesive composition can be applied onto a substrate surface or a mold surface which has been subjected or not subjected to a removing agent treatment.

From the above mentioned combination of two kinds of compounds in the present compositions, there could be obtained a sealing material that is tacky under ambient conditions, which can be readily cured with heat, light, ionized radiation, and having also extremely tough or elastic physical property after curing. The specific feature of the present invention resides in having tackiness exhibited without using a tackiness-imparting resin of low molecular weight at all. Therefore, the material has excellent solvent resistance and heat resistance after curing.

Cohesive force is poor in the low molecular weight substances such as reactive (meth)acrylate urethane resin monomers or oligomers thereof and other reactive (meth)acrylate resin monomers or oligomers, although they may be solid at normal temperature. On the other hand, saturated polyester resins, and acrylic pressure sensitive adhesive themselves are not reactive as the reactive low molecular acrylates described above. The present inventors were successful in obtaining a curable composition which is tacky at normal state by combination of these two kinds of materials or compounds.

The reactive compound selected from (meth)acrylic urethane monomers and oligomers thereof, to be used in the present invention is a liquid or solid preferably having a viscosity of $10^2$ cps or higher at temperatures up to 60 °C while the saturated polyester resins, having cohesive force are resins which are non-flowable at normal state having a glass transition point of room temperature or lower. By dispersing uniformly or making compatible by melting or dissolving these resins, the reactive pressure sensitive adhesive agent of the present invention can be obtained. The product obtained has no flowability at temperatures up to 60 °C and has adequate tacky and cohesive force, and therefore it can be supplied in all kinds of forms, for example, strands, pellets, sheets, blocks.

In the present invention, the formulation ratio of said material selected from polyester resins to said reactive compound is 7:3 to 2:8 by weight.

In the present pressure sensitive adhesive composition, powder or fine powder of known magnetic materials, electroconductive materials, dielectric materials, fluorescent materials, pigments, organic resins, inorganic materials, metals, etc. can be formulated for filler or other purposes, usually in an amount of 1 to 60 parts by weight, preferably 10 to 20 parts by weight based on the total amount of two essential components, namely the material and the reactive compund, and the thus formulated composition can be utilized as the sealer by forming into pellets, sheets, blocks, etc.

As the curing method, by addition of a photo- or heat-curable catalyst such as appropriate known photo-sensitizer, thermal reaction initiator, etc. in the above composition, if necessary, curing is possible with either heat, light or ionized radiation, and the curing temperature is adequately controlled in the case of heat.

The above described photo- or heat-curable catalyst to be used in the present invention may include, for example, a benzoin ether type compound, a benzophenone type compound, an acetophenone type compound and a thioxanthone type compound as a photo-curable catalyst, and t-butyl peroxy (2-ethyl hexanate), benzoyl peroxide, t-butyl peroxymaleic acid, t-butyl peroxylaurate, cyclohexanone peroxide, t-butyl peroxy allyl carbonate, 2,2-bis(t-butylperoxy)octane, t-butyl peroxyacetate, t-butyl peroxybenzoate, di-t-butyl diperoxy isophthalate, methyl ethyl ketone peroxide, di-cumyl peroxide, 2,5-dimethyl-2,5-di(t-butylperoxy)hexane, t-butyl cumyl peroxide, di-isopropylbenzene hydroperoxide, di-t-butyl peroxide, p-menthane hydroperoxide, cumene hydroperoxide, t-butyl hydroperoxide, lauroyl peroxide and t-butyl peroxybenzoate as a heat-curable catalyst.

Among the above exemplified catalysts, particularly preferable are benzoin ether type compounds and acetophenone type compounds as a photo-curable catalyst and benzoyl peroxide, lauroyl peroxide, t-butyl peroxybenzoate, di-t-butyl peroxide and t-butyl hydroperoxide as a heat-curable catalyst.

The formulation ratio of the photo- or heat-curable catalyst is 0.5 to 5.0 parts by weight based on the total amount of said material and said reactive compound taken as 100 parts by weight.

The composition added with the above catalyst can be spread on a releasable paper to prepare a sheet of the reactive pressure sensitive adhesive agent, said sheet is plastered onto an adherend to be attached and heat, U.V. ray or etc. is radiated after the releasable paper is peeled off to give a thick coating. Also, when applied to the seam or concave portion of iron plate, it is useful as substitute for sealer or putty.

By use of the reactive pressure sensitive adhesive as the sealing material, it becomes possible to apply sealing easily even at the portion where such application can be done with difficulty by means of a gun in the prior art. Also, even if there may be once a failure in application, workability can be improved to great extent without contamination, etc., because the sealing material can be cleanly removed.

The present invention is described by referring to the following Examples. However, the present invention is not limited by these Examples.

Example 1

```
Saturated polyester "Polyester LP-022"        70 parts
(Nippon Gosei Kagaku        (parts by weight, herein-
  Kogyo K.K.)                 after the same)
Urethane acrylate "Biscoat 812"               30 parts
  800 -1200 cps/50°C
(Osaka Yuki Kagaku Kogyo K.K.)
Isobutyl peroxide                              1 part
```

The above composition was dissolved in toluene so as to give a solid content of about 30 %. The solution was cast into a box made of a releasable paper and the solvent was dried to prepare a reactive pressure sensitive adhesive composition film having a thickness of 500 μm. For the film obtained to be used as the sealing material, it was plastered onto the seam of an iron plate, and after the releasable paper was peeled off, it was cured at 150 °C for 30 minutes.

The above composition had tacky before curing and could be plastered again. Also, during curing, the composition melted and the corners of the film were removed to fill the gap between the iron plates and cured therein, which serves as sealers desired. The cured product did not change even when dipped in boiling water for 1 hour.

Example 2

The reactive pressure sensitive adhesive composition film having a thickness of 500 μm obtained in Example 1 was punched into a doughnut shape having an outer diameter of 12 mm and an inner diameter of 6 mm . In place of washer on a bolt having an outer diameter 5 mm , this was clamped onto the iron plates with a nut, followed by heat-curing at 160 °C for 20 minutes.

The reactive pressure sensitive adhesive composition film used in place of washer was melted and cured, and it was found to be suitable for prevention of loosening, water-resistant or water-proof sealer.

Example 3

| Saturated polyester "Vylon 200" (Toyobo Co. Ltd.) | 70 parts |
|---|---|
| Urethane acrylate "Aronix M-1100" 200,000 - 300,000 cps/50°C (Toa Gosei Chemical Industries Co. Ltd.) | 30 parts |
| Silica fine powder "Aerosil R-972" (Nippon Aerosil K.K.) | 20 parts |
| Pigment Titanium White average particle size : 0.5 $\mu$m | 20 parts |
| Isobutyl peroxide | 1 part |

The above starting material was mixed by a kneader and cast by means of an injection molding machine into a silicone rubber mold of an emblem taken from the vehicle body of an automobile. After cooling, the emblem molding was taken out from the mold. When the emblem molding was plastered onto the vehicle body of an automobile and cured by heating at 140 °C for 20 minutes, the emblem molding was cured to be firmly bonded onto the vehicle body. Also, spraying of a paint over the emblem molding further improved adhesion.

Also, a fluorescent material was mixed in an amount of 30 to 50 parts in the above formulated starting materials to prepare similarly a mold of emblem, which was plastered onto the vehicle body. The emblem plastered emitted luminescence in a dark place, whereby the letters were seen as floated against the dark background.

Example 4 For the reactive pressure sensitive adhesive composition film obtained in Example 1, the film was punched previously into a shape of the site at which sealing is to be applied, and then applied to the above described sealing site. By this, workability in applying of sealing could be further improved.

Example 5

| Saturated polyester "Polyester LP-022" (Nippon Gosei Kagaku Kogyo K.K.) | 60 parts |
|---|---|
| Urethane acrylate resin "Artresin UN-9000" 200 cps/60°C (Negami Kogyo) | 40 parts |
| Pigment Titanium White average particle size : 40 $\mu$m | 30 parts |
| "Perloyl IPP" (Nippon Oil & Fats Co.,Ltd.) | 2 parts |

The above formulated reactive pressure sensitive adhesive composition was used to prepare a toluene solution similarly as in Example 1, which was cast into a mold to prepare a reactive pressure sensitive adhesive composition film having a thickness of 200 $\mu$m. This was plastered onto an iron plate and cured for examination of adhesiveness with the iron plate.

The film cured on the iron plate was found to have adhesiveness of 100/100 according to the cross cut test of the paint.

Example 6

| Saturated polyester "Polyester LP-022" (Nippon Gosei Kagaku Kogyo K.K.) | 70 parts |
|---|---|
| Urethane acrylate "Biscoat 812" (Osaka Yuki Kagaku Kogyo K.K.) | 30 parts |
| Isobutyl peroxide | 1 part |
| Urethane resin fine powder (maximum particle size: 50 $\mu$m) | 50 parts |

The above formulated composition was uniformly kneaded and then flowed and spread on a polyester (PET) film having a thickness of 25 $\mu$m so as to give a thickness of 1 mm to obtain a reactive pressure sensitive adhesive sheet. Tacky surface of the thus obtained sheet has tacky but no flowability. A portion of the sheet was cut out, which was then plastered to cold rolled steel plate (SPCC-B JIS G 3141)) and heated for curing at 140 °C for 20 minutes after peeling of the PET film, to give a non-tacky surface. When sand paper is applied on the surface, grinding can be carried out without blocking or clogging. The above sheet was cooled to -20 °C, wound up on a stick having a diameter of 20 mm and curved to an appropriate angle to give no cracking at all in the sheet.

Example 7

| Saturated polyester "Vylon 300" (Toyobo K.K.) | 40 parts |
| Urethane acrylate "Yubisan 893" | 60 parts |
| Benzoyl peroxide | 0.5 part |
| talc | 20 parts |

The above formulated composition was mixed by use of a kneader, applied to a film extruder to give a sheet having a thickness of 1 mm and tackiness at normal temperature. The thus obtained sheet was cut into a width of 20 mm, which was plastered to the edge portion of a steel plate (SPCC-B) having a thickness of 0.8 mm and heated at 140 °C for 20 minutes. The edge portion of the sheet plastered was melt to become round and cured in such a state. The surface of the sheet has luster and smoothness. The steel plate the edge portion of which was plastered was subjected to the spray test by use of 3% aqueous sodium chloride solution to recognize no generation of rust in the edge portion sealed.

Example 8

| Saturated polyester "Polyester LP-022" (Nippon Gosei Kagaku Kogyo) | 70 parts |
| Urethane acrylate "Biscoat 812" (Osaka Yuki) | 30 parts |
| Isobutyl peroxide | 1 part |

The above formulated starting material was dissolved in ethyl acetate so as to give a solid content of about 30 % to obtain an ethyl acetate solution of a reactive pressure sensitive adhesive composition. A polyethylene terephthalate film subjected to releasing agent treatment was coated with the above solution, dried, cut into a width of 20 mm and wound up in a form of tape to prepare a sealer tape.

The tape obtained was cut into an appropriate length and plastered onto a seam of iron plates. In determining the position, plastering could be effected again by pressing the tape lightly. After the plastering position was determined, the tape was strongly pressed, and after the polyethylene terephthalate film was peeled off curing was effected by heating at 140 °C for 30 minutes.

The cured product was found to be well adhered to the iron plates and fill the gap cleanly. When water resistance was tested, the sealing effect was also sufficient.

Examples 9

A polyethylene terephthalate film subjected to releasing agent treatment was coated with the formulated starting materials of 30% ethyl acetate solution shown in Example 8. This was covered with a releasable paper to obtain a sealer sheet. The sealer sheet can be plastered onto a place having a large area, as different from a tape. It can be punched out into any desired shape by a punching working machine, to prepare a worked product capable of being employed for various uses.

For example, a worked product punched out into an inner diameter of 6 mm and an outer diameter of 9 mm can be used for loosening prevention of bolt clamping and water-proof working agent. One punched out into a doughnut shape is sandwiched between a bolt and an iron plate during clamping of the bolt. By doing so, the bolt will not be fallen off before clamping of the bolt with a nut. This may be cured by appropriate application of heating or UV-ray irradiation before clamping with a nut, or alternatively curing may be effected similarly as described above after clamping. The cured product could prevent penetration of water through the threaded hole in addition to prevention of loosening of the screws. (Ordinary double-coated tape has weak water-proof effect) . Also, since the sheet can be plastered previously on the backside of a bolt, workability is better than paste-like screw keeper.

Example 10

The sealer tape obtained in Example 8 was plastered onto a portion of an adherend having a complicated three-dimentional surfaces, the substrate of polyethylene terephthalate was peeled off and then another adherend was pressed onto the upper surface of the exposed reactive pressure sensitive adhesive.

In this case because of an appropriate tackiness of the above described reactive pressure sensitive adhesive surface, both adherends are kept in a seamed state without separation from each other. When heating was applied as such at 140 °C for 20 minutes, the reactive pressure sensitive adhesive composition was cured and both adherends were bonded firmly to each other. Although a sealer tape was used in the above case, the same effect can be obtained by such a procedure that the ethyl acetate solution of the reactive pressure sensitive adhesive prepared in Example 8 is applied onto a portion of an adherend, dried and thereafter another adherend is pressed onto the reactive pressure sensitive adhesive surface formed and curing is conducted thereon. Two pieses of iron plates having the same V-shape were prepared and one of the plates was coated with the ethyl acetate solution of the reactive pressure sensitive adhesive on the inner side thereof. The other iron plate was superposed on the coated surface. The two iron plates were bonded firmly each other when heated as such in an oven of 160 °C for 25 minutes.

Example 11

| Saturated polyester "Vylon 200" (Toyobo) | 50 parts |
| Urethane acrylate "NK Ester U-4HA" (Shinnakamura Kagaku) | 50 parts |
| "Perloyl IPP" (Nippon Oil & Fats Co.,Ltd.) | 0.5 part |

The above formulated starting material was kneaded uniformly and spread into a thickness of 1 mm on releasing paper having a width of 20 mm to prepare a sealing tape, which was wound up in a rolling state. Sealer tape was cut out from the obtained roll into a length of 100 mm, which was applied onto the edge portion of a steel plate having a thickness of 0.8 mm subjected to electrolytic deposition coating. Since the sealer tape has tacky at normal temperature it adhered to the edge portion with keeping a shape corresponding to the edge portion. When the steel plate having the sealer tape plastered on the edge portion thereof was heated at 140 °C for 30 minutes in such a state that the plate was erected vertically, the corner of the sealer tape was melt with heat to become round. However, as the whole of the sealer tape, no saggings or gaps could not be recognized. Thereafter application and printing are carried out to give an excellent adhesion.

Example 12

| Saturated polyester "Vylon 300" (Toyobo) | 40 parts |
| Urethane acrylate "Yubisan 893" (Nomure Office) | 60 parts |
| Talc | 20 parts |
| Benzoyl peroxide | 1 part |

The above formulated starting material was mixed uniformly and molded into a stick having a diameter of 5 mm to obtain a stick-shaped sealer molding, which has tackiness but no flowability at notmal temperature. The molding was inserted with fingers into a gap of 4 mm in width and 2 mm in depth between two steel plates. Next the molding was heated at 160 °C for 20 minutes and then due to heat during heating the molding was permeated deeply into the inner portion of the gap. The sealer molding flown out from the steel plates was ground with sand paper 240 and application was conducted thereon in an ordinary manner to give a smooth seam which could not be recognized at all.

## Claims

1. A reactive pressure-sensitive curable adhesive composition having increased adhesive force after curing which comprises at least one saturated polyester resin which is non-flowable at temperatures up to 60 °C and at least one (meth)acrylic urethane oligomer wherein the formulation ratio of said saturated polyester resins to said oligomers is 7:3 to 2:8 by weight.

2. The reactive pressure sensitive adhesive composition according to claim 1, wherein said (meth)acrylic urethane oligomers have a viscosity of $10^2$ cps or higher at temperatures up to 60 °C.

3. The reactive pressure sensitive adhesive composition according to claim 1, wherein said composition further contains a photo- or heat-curable catalyst.

4. The reactive pressure sensitive adhesive composition according to claim 1, wherein said composition further contains at least one powder or fine powder selected from magnetic materials, electroconductive material, dielectric materials, fluorescent materials, pigments, organic resins, inorganic materials and metals.

5. The reactive pressure sensitive adhesive composition according to claim 3, wherein said photo- or heat-curable catalyst is selected from the group consisting of benzoin ether type compound and acetophenone type compound as a photo-curable catalyste and benzoyl peroxide, lauroyl peroxide, t-butyl peroxybenzoate, di-t-butyl peroxide and t-butyl hydroperoxide as a heat-curable catalyst.

6. The reactive pressure sensitive adhesive composition according to claim 3, wherein formulation ratio of said photo- or heat-curable catalyst is 0.5 to 5.0 parts by weight based on the total amount of said material and said reactive compound taken as 100 parts by weight.

7. The reactive pressure sensitive adhesive composition according to claim 4, wherein the formulation ratio of said at least one powder or fine powder selected from magnetic materials, electroconductive material, dielectric materials, fluorescent materials, pigments, organic resins, inorganic materials and metals is 1 to 60 parts by weight based on the total amount of said material and said reactive compound taken as 100 parts by weight.

8. A sealer tape or sheet or molding which comprises a reactive pressure sensitive adhesive composition according to at least one of claims 1 to 7, applied onto a substrate surface or a mold surface which has been subjected or not subjected to the releasing agent treatment.

9. The sealer tape or sheet according to claim 8, wherein said reactive pressure sensitive adhesive composition is formed on a substrate surface to a thickness of $10^{-5}$ to $10^{-2}$m.

10. The sealer tape or sheet according to claim 9, wherein said reactive pressure sensitive adhesive composition is formed by coating between two sheets of film substrates subjected to the releasing agent treatment.

11. The sealer moldings according to claim 8, wherein said mold surface is any desired mold surface.

**Patentansprüche**

1. Eine reaktive selbsthaftende (druckempfindliche) härtbare Klebstoffzusammensetzung mit größerer Adhäsionskraft nach dem Härten, welche wenigstens ein gesättigtes, bei Temperaturen bis zu 60 Grad Celsius nicht fließfähiges Polyesterharz und wenigstens ein (Meth)acryl-urethan-oligomer enthält, wobei in der Rezeptur das Gewichtsverhältnis der gesättigten Polyesterharze zu den Oligomeren 7:3 bis 2:8 beträgt.

2. Reaktive selbsthaftende Klebstoffzusammensetzung nach Anspruch 1, worin die (Meth)acryl-urethan-oligomeren eine Viskosität von $10^2$ cps oder höher bei Temperaturen bis zu 60 Grad Celsius haben.

3. Reaktive selbsthaftende Klebstoffzusammensetzung nach Anspruch 1, worin die Zusammensetzung außerdem einen photo- oder wärmehärtbaren Katalysator enthält.

4. Reaktive selbsthaftende Klebstoffzusammensetzung nach Anspruch 1, worin die Zusammensetzung außerdem wenigstens ein Pulver oder Feinpulver enthält, das ausgewählt ist aus magnetischen Materialien, elektrisch leitenden Materialien, dielektrischen Materialien, floureszierenden Materialien, Pigmenten, organischen Harzen, anorganischen Materialien und Metallen.

5. Reaktive selbsthaftende Klebstoffzusammensetzung nach Anspruch 3, worin der photo- oder wärmehärtbare Katalysator ausgewählt ist aus der Gruppe Verbindung vom Benzoinethertyp und Verbindung vom Acetophenontyp als ein photohärtbarer Katalysator und Benzoylperoxid, Lauroylperoxid, t-Butylperoxybenzoat, Di-t-butylperoxid und t-Butylhydroperoxid als ein wärmehärtbarer Katalysator.

**6.** Reaktive selbsthaftende Klebstoffzusammensetzung nach Anspruch 3, worin das Rezepturverhältnis des photo- oder wärmehärtbaren Katalysators 0,5 bis 5,0 Gewichtsteile bezogen auf die mit 100 Gewichtsteilen angenommene Gesamtmenge des Materials und der reaktiven Verbindung beträgt.

**7.** Reaktive selbsthaftende Klebstoffzusammensetzung nach Anspruch 4, worin das Rezepturverhältnis des wenigstens einen Pulvers oder Feinpulvers, das ausgewählt ist aus magnetischen Materialien, elektrisch leitendem Material, dielektrischen Materialien, fluoreszierenden Materialien, Pigmenten, organischen Harzen, anorganischen Materialien und Metallen 1 bis 60 Gewichtsteile beträgt, bezogen auf die mit 100 Gewichtsteilen angenommene Gesamtmenge des Materials und der reaktiven Verbindung.

**8.** Ein Dichtungsband oder -blatt oder -formstück, welches eine reaktive selbsthaftende Klebstoffzusammensetzung nach wenigstens einem der Ansprüche 1 bis 7 enthält, die auf eine Trägerfläche oder eine Formfläche aufgebracht worden ist, die der Trennmittelbehandlung unterworfen oder nicht unterworfen wurde.

**9.** Dichtungsband oder -blatt nach Anspruch 8, worin die reaktive selbsthaftende Klebstoffzusammensetzung auf einer Trägeroberfläche mit einer Dicke von $10^{-5}$ bis $10^{-2}$M gebildet ist.

**10.** Dichtungsband oder -blatt nach Anspruch 9, worin die reaktive selbsthaftende Klebstoffzusammensetzung durch Beschichtung zwischen zwei Folien von Filmträgern, die der Trennmittelbehandlung unterworfen wurden, gebildet ist.

**11.** Dichtungsformkörper nach Anspruch 8, worin die Formoberfläche irgendeine gewünschte Formoberfläche ist.

**Revendications**

**1.** Composition réactive, adhésive, sensible à la pression et réticulable possédant un pouvoir adhésif accru après réticulation qui comprend au moins une résine de polyester saturé qui est non fluide aux températures jusqu'à 60°C et au moins un oligomère d'uréthane méth(acrylique) dans laquelle le rapport de formulation desdites résines de polyester saturé auxdits oligomères va de 7:3 à 2:8 en poids.

**2.** La composition réactive, sensible à la pression et adhésive selon la revendication 1, dans laquelle lesdits oligomères d'uréthane (méth)acrylique possèdent une viscosité de $10^2$ cps ou plus, à des températures jusqu'à 60°C.

**3.** La composition réactive, sensible à la pression et adhésive selon la revendication 1 dans laquelle ladite composition contient de plus un catalyseur photo- ou thermo-réticulable.

**4.** La composition réactive, sensible à la pression et adhésive selon la revendication 1 dans laquelle ladite composition contient, en outre, au moins une poudre ou poudre fine sélectionnée parmi des matériaux magnétiques, un matériau électroconducteur, des matériaux diélectriques, des matériaux fluorescents, des pigments, des résines organiques, des matériaux inorganiques et des métaux.

**5.** Composition réactive, sensible à la pression et adhésive selon la revendication 3 dans laquelle ledit catalyseur photo- ou thermo-réticulable est choisi parmi le groupe consistant en des composés du type benzoïne éther et du type acétophénone pour ce qui est des catalyseurs photo-réticulables et en le peroxyde de benzoyle, le peroxyde de lauroyle, le peroxybenzoate de t-butyle, du peroxyde de di-t-butyle et de l'hydroperoxyde de t-butyle pour ce qui est du catalyseur.

**6.** Composition réactive, sensible à la pression et adhésive selon la revendication 3 dans laquelle le rapport de formulation dudit catalyseur photo- ou thermo-réticulable est de 0,5 à 5,0 parties en poids sur la base de la quantité totale dudit matériau et dudit composé réactif prise comme 100 parties en poids.

**7.** Composition réactive, sensible à la pression et adhésive selon la revendication 4 dans laquelle le rapport de formulation de ladite poudre ou poudre fine choisie parmi des matériaux magnétiques, un matériau électroconducteur, des matériaux diélectriques, des matériaux fluorescents, des pigments, des résines organiques, des matériaux inorganiques et des métaux, est de 1 à 60 parties en poids sur la base de la quantité totale dudit matériau et dudit composé réactif pris comme 100 parties en poids.

**8.** Ruban adhésif, feuille adhésive ou moulage adhésif qui comprend une composition réactive, sensible à la pression et adhésive selon l'une au moins des revendications 1 à 7, appliquée sur la surface d'un substrat ou une surface moulée qui ont été soumises ou non à un traitement par un agent de démoulage.

**9.** Ruban ou feuille adhésif selon la revendication 8, dans lequel ladite composition réactive, sensible à la pression et adhésive est formée sur une surface d'un substrat selon une épaisseur de $10^{-5}$ à $10^{-2}$ m.

**10.** Ruban ou feuille adhésif selon la revendication 9 dans lequel ladite composition réactive, sensible à la pression et adhésive formée par dépôt entre deux feuilles de pellicules de substrats soumis au traitement d'un agent de démoulage.

**11.** Matière moulée adhésive selon la revendication 8, dans laquelle ladite surface moulée est n'importe quelle surface moulée souhaitée.